(19) Europäisches Patentamt
European Patent Office
Office européen des brevets

(11) **EP 2 713 240 A2**

(12) **EUROPEAN PATENT APPLICATION**

(43) Date of publication:
02.04.2014 Bulletin 2014/14

(51) Int Cl.:
*G06F 3/01* (2006.01)

(21) Application number: 13168945.7

(22) Date of filing: 23.05.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 29.05.2012 US 201213482298

(71) Applicant: Delphi Technologies, Inc.
Troy, MI 48007 (US)

(72) Inventors:
• Taylor, Ronald M.
Greentown, IN Indiana 46936 (US)
• Greene, Jeremy S.
Mccordsville, IN Indiana 46055 (US)
• Murphy, Morgan D.
Kokomo, IN Indiana 46901 (US)

(74) Representative: Allain, Michel Jean Camille et al
Legal Staff - Patents
Delphi France SAS
Bât. le Raspail - ZAC Paris Nord 2
22, avenue des Nations
CS 65059 Villepinte
95972 Roissy CDG Cedex (FR)

(54) **Non-contact gesture recognition system and method**

(57) A non-contact gesture recognition system (10) for recognizing gestures (28) made by an occupant (12) of a vehicle (14) using a first multiple-zone temperature sensor equipped with an array of temperature sensors (32). The sensor outputs an array signal indicative of a zone temperature for each of a plurality of zones (36) within the vehicle (14). The array may be oriented such that a sample direction on the array arising from the gesture (28) is characterized as diagonal. The sensor may include a multi-focal length Fresnel lens (34) panel formed of a plurality of Fresnel lens (34) elements (62) having various focal lengths.

FIG. 1

EP 2 713 240 A2

**Description**

TECHNICAL FIELD OF INVENTION

This disclosure generally relates to non-contact gesture recognition, and more particularly relates to how to use a multiple-zone temperature sensor for gesture recognition without providing infrared illumination.

BACKGROUND OF INVENTION

Touch sensitive screens configured to recognize certain patterns of movement (gestures) of a finger contacting the screen are known. However, touching the screen can cause degradation of the screen as finger oils can leave smudges on the screen, and frequent contact can eventually cause wear on the screen. Also, when a vehicle operator must reach to touch such a screen in order to make the gesture, the vehicle operator may become distracted from safely operating the vehicle. What is needed is a way to recognize gestures made by a vehicle operator that does not require the vehicle operator to make contact with a touch sensitive screen.

SUMMARY OF THE INVENTION

In accordance with one embodiment, a non-contact gesture recognition system for recognizing gestures made by an occupant of a vehicle is provided. The system includes a first multiple-zone temperature sensor and a controller. The first sensor is equipped with a first array of temperature sensors. The first sensor is configured to be installed on the vehicle effective to have a first field of view of a vehicle interior of the vehicle and output a first array signal based on temperature signals from the first array. The first array signal is indicative of a zone temperature for each of a plurality of zones within the first field of view. The controller is configured to receive the first array signal and determine a zone temperature value for each of the zones based on the first array signal, and recognize a gesture made by the occupant based on the zone temperature values. The system does not rely on illumination of the vehicle interior by an infrared light emitter to recognize the gesture.

In another embodiment, the system advantageously includes a second multiple-zone temperature sensor. The second sensor is equipped with a second array of temperature sensors distinct from the first array. The second sensor is configured to be installed in the vehicle at a location spaced apart from the first sensor and have a second field of view characterized as intersecting the first field of view from a distinct perspective. The second sensor is configured to output a second array signal based on temperature signals from the second array. The second array signal is indicative of a zone temperature for each of a plurality of zones within the second field of view.

In another embodiment, the first array is advantageously oriented such that a sample direction on the array arising from the gesture is characterized as diagonal.

In yet another embodiment, the first sensor advantageously includes a multi-focal length Fresnel lens panel formed of a plurality of Fresnel lens elements.

Further features and advantages will appear more clearly on a reading of the following detailed description of the preferred embodiment, which is given by way of non-limiting example only and with reference to the accompanying drawings.

BRIEF DESCRIPTION OF DRAWINGS

The present invention will now be described, by way of example with reference to the accompanying drawings, in which:

Fig. 1 is a perspective view of a vehicle interior equipped with a non-contact gesture recognition system in accordance with one embodiment;

Fig. 2 is a view of an occupant from a perspective corresponding to that of a sensor for the system of Fig. 1 in accordance with one embodiment;

Fig. 3 is a diagram of the system of Fig. 1 in accordance with one embodiment;

Fig. 4 is a front view of a lens of the system of Fig. 1 in accordance with one embodiment; and

Fig. 5 is a side view of a lens of the system of Fig. 1 in accordance with one embodiment.

DETAILED DESCRIPTION

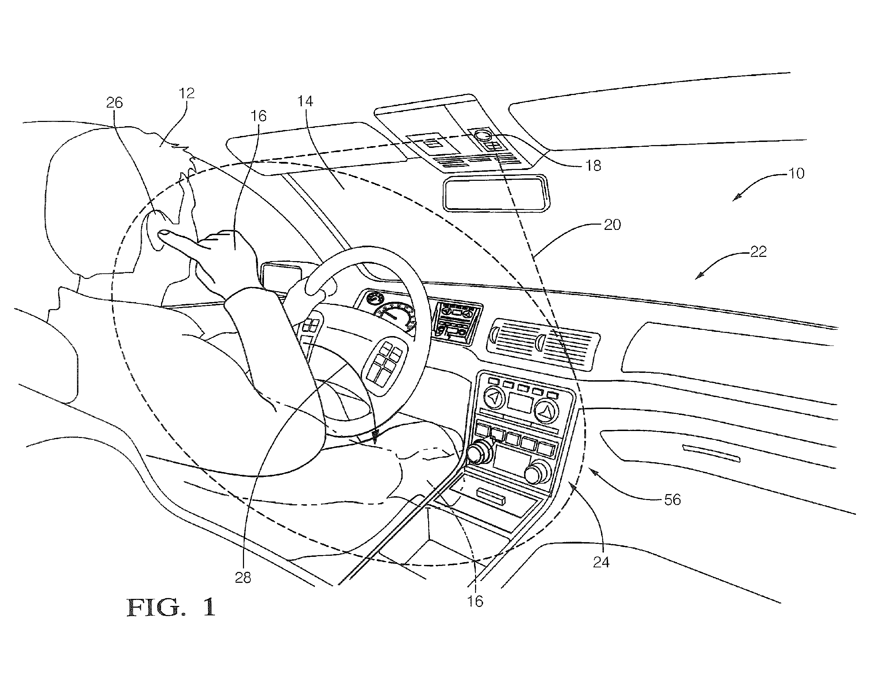

Fig. 1 illustrates a non-limiting example of a non-contact gesture recognition system, hereafter the system 10. In general, the system 10 is for recognizing gestures made by an occupant 12 of a vehicle 14. In the description that follows, the system 10 is described by way of non-limiting examples as a means to detect, determine, or recognize hand

EP 2 713 240 A2

gestures made by a hand 16 of the occupant 12. It is recognized that the system could also be used to recognize gestures made with other body parts such as the head, arm, or elbow of the occupant 12, or simply detect the presence of the occupant 12 or other person residing within or reaching into the vehicle 14.

The system 10 does not require contact with, for example, a touch sensitive screen to recognize a gesture. However, a gesture that includes contact with any part of the vehicle 14 is not excluded, but doing so does not require a touch detector or contact detector for the system 10 to determine that contact has been made. Furthermore, a gesture may include, for example, the occupant 12 making contact by the hand 16 or finger of the hand 16 with the occupant's head, ear 26, eye, or other hand to form a gesture that conveys information. While the system 10 is illustrated as being installed in the vehicle 14, the system 10 may also be used for gesture recognition in other applications such as in a residence for operating a home entertainment system.

The system 10 includes a first multiple-zone temperature sensor, hereafter the first sensor 18. By way of example and not limitation, the first sensor 18 is illustrated as being located in an overhead location of the vehicle interior 22 in order to have a first field of view 20 of the vehicle interior 22. However it is recognized that other locations may be better for recognizing certain types of gestures.

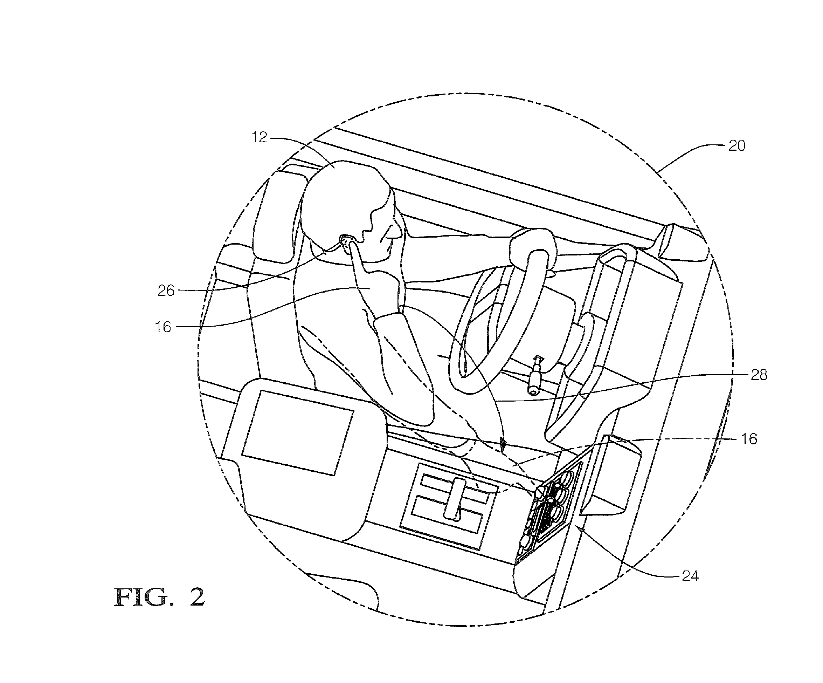

Fig. 2 illustrates a non-limiting example of the first field of view 20 from the perspective of the first sensor 18 at the location suggested in Fig. 1. Like Fig. 1, the occupant 12 is illustrated as making a gesture 28 by first holding the hand 16 near the ear 26 and then moving the hand 16 to a location near the entertainment system 24. The gesture 28 may be interpreted to mean, for example, that the occupant 12 wants an increase to the volume of sound output by the entertainment system 24. By making the gesture 28, the occupant 12 is able to increase entertainment system volume without looking away from the roadway forward of the vehicle 14, and so is less distracted from operating the vehicle 14.

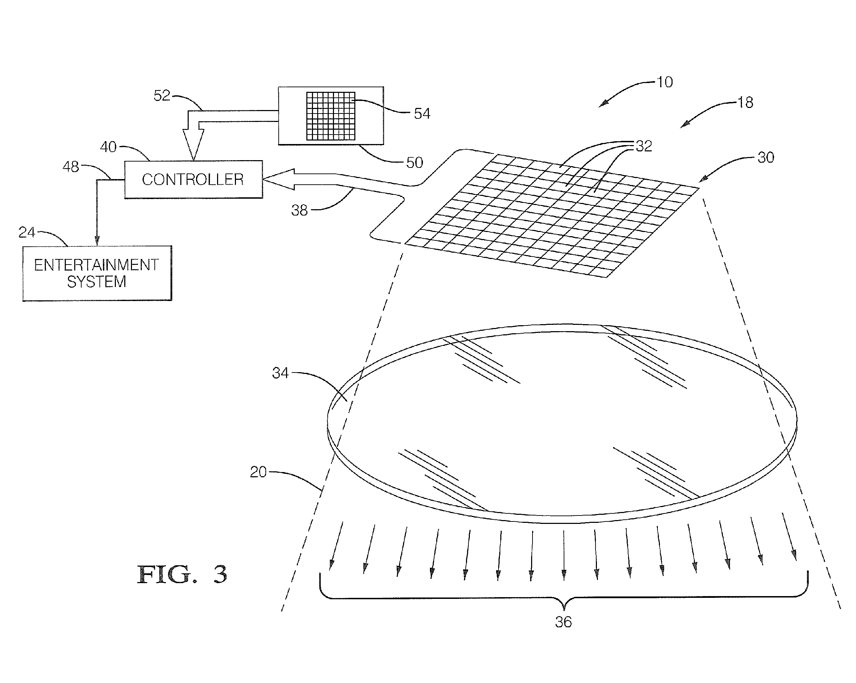

Fig. 3 is a non-limiting example of the first sensor 18. It should be appreciated that Fig. 3 does not include every detail of the first sensor 18, but only illustrates certain parts of the first sensor 18 in order to simplify the illustration. In general, the first sensor 18 is equipped with a first array 30 of temperature sensors 32. The first array 30 may be a plurality of thermopile sensors such as those available from Heimann Sensor GmbH located in Dresden, Germany. By way of example and not limitation, the first array 30 is illustrated as a sixteen by sixteen (16x16) array. It is recognized that suitable gesture recognition may be accomplished with arrays having fewer temperature sensors. Using such arrays of thermopile sensors instead of an infrared (IR) camera is preferred to keep the cost of the system 10 low, an important factor for automotive applications. Furthermore, by using a thermopile type sensor, the system 10 is able to detect the gesture 28 without providing illumination of the vehicle interior 22 by an infrared light emitter.

The first sensor 18 may include a lens 34 to direct the first field of view 20 onto the first array 30 so that each of the temperature sensors 32 is able to detect a temperature of one of a plurality of zones 36 within the first field of view 20. The zones 36 are indicated by the plurality of arrows shown within the first sensor 18 field of view 20. It should be appreciated that Fig. 3 suggests that zones 36 indicated by the arrows is a one-dimensional array only for the purpose of simplifying the illustration, and that a two-dimensional array is contemplated so the plurality of arrows would include arrows in a side-to-side arrangement as well as an up-down arrangement. It is understood that the first array 30 is generally two-dimensional, and so measures a temperature at each of the zones 36 within and throughout the first field of view 20.

The individual zones may each be relatively small regions that result in detection gaps between the individual zones, or the zones may be sized and shaped so most or all locations in the sensor field of view 20 are covered by one of the zones 36, or the zones 36 may be sized and shaped so there is some overlap so some locations in the first field of view 20 are covered by more than one of the zones 36.

The first sensor 18 may output a first array signal 38 based on temperature signals from each of the temperature sensors 32 of the first array 30. As such, the first array signal 38 generally includes temperature data indicative of a zone temperature for each of the zones 36 viewed by the first sensor 18. A suitable resolution for the first sensor 18 may be provided by a thermopile array of sixteen by sixteen thermopiles that may be configured to view two hundred fifty six (256) distinct temperature zones in the first field of view 20.

As used herein, the multiple zone temperature sensor or the first sensor 18 is a non-imaging thermal detector and is distinguished from an infrared camera at least because the resolution of the first sensor 18 is too low to discern what is being displayed by an image based solely on the first array signal 38. In other words, the resolution of the first sensor 18 is too coarse for temperature data to form a meaningful image. The Bureau of Industry and Security of the United States Department of Commerce has issued regulations titled US Commerce Control List Supplement 1 Part 774 (see www.bis.doc.gov/policiesandregulations/ear/index.htm), and those regulations (see Category 6 - Sensors and Lasers, page 9) define non-imaging thermal detector by stating that "Imaging thermal detectors are a multi-element array of thermal detectors with the capacity to form a visual, electronic or other representation of an object with sufficient fidelity to enable understanding of its shape or other spatial characteristics, such as height, width, or area. A multi-element array of thermal detectors without the capacity to form spatial representation of an object is non-imaging." As such, any infrared imaging device having a resolution greater than four thousand temperature zones (e.g. 64 by 62 = 3968 thermopiles) is specifically excluded from being comparable to the first sensor 18.

3

Referring again to Fig. 1, it is recognized that adding a second sensor located elsewhere in the vehicle interior 22 may be advantageous to, for example, form a three dimensional (3D) model of a gesture. As such, the system 10 may include a second multiple-zone temperature sensor, hereafter the second sensor 50 (Fig. 3). In general, the second sensor may be similar to the first sensor 18 in terms of general construction, and so may be equipped with a second array 54 of temperature sensors distinct from the first array 30. By way of example and not limitation, the second sensor 50 may be installed into the roof of the vehicle interior 22 so that the second sensor 50 has a perspective view of the vehicle interior 22 comparable to the perspective shown in Fig. 1.

In general, the second sensor 50 may be installed in the vehicle 14 at a location spaced apart from the first sensor 18, and so may have a second field of view 56 characterized as preferably intersecting the first field of view 20 from a distinct perspective. The second sensor 50 may be configured to output a second array signal 52 based on temperature signals from the second array 54 such that the second array signal 52 is indicative of zone temperatures for zones within the second field of view 56, some of which preferably intersect with the plurality of zones 36. By way of a further example, an additional sensor (not shown) may be located to better focus on certain areas of the vehicle interior 22, such as an area proximate to an entertainment system 24.

In general, some aspects of gesture recognition can be characterized as tracking the motion of a hot spot or hot area (e.g. the hand 16) across the first array 30 and/or the second array 54. It was observed that if the motion was such that the hot area moved diagonally, i.e. if the sampling direction was diagonal, then the effective resolution was increased by a factor about equal to the square root of two (~1.4) because the limiting resolution of the temperature sensors is generally determined by the size of the temperature sensors, also called the detector subtense. The limiting resolution is defined as the reciprocal of the detector element size, and may be expressed in units of cycles or line-pairs (lp) per millimeter (mm). In other words, a resolution cycle or line-pair is generally defined as two contiguous detector array elements. A known metric for specifying the ability of a detector array to reproduce resolution is the modulation transfer function (MTF).

The MTF then is a measure of the ability of the multi-zone temperature sensor to reproduce temperatures across the spatial frequency domain in terms of cycles/mm or lp/mm. Rotation of the temperature sensors by forty five degrees from a typical orientation to provide the diagonal orientation reduces the effective size of the detector element in the sampling direction by the square root of two, and so improves or increases the effective resolution by about the same amount. The sampling direction is generally defined as the direction of the relative movement of a 'hot spot' across the temperature sensors corresponding to the direction of the hand movement. Therefore, if two multi-zone temperature sensors are orthogonally positioned to advantageously sample a moving hand in two dimensions, for example the first sensor 18 is used to sample movement in the azimuth direction and the second sensor 50 is used to sample hand movement in the elevation direction, the relative location of the hand position can be determined and used to define an x-y position or grid position relative to an automotive display without the requirement to touch the display. As such, it may be preferable for the first array 30 and/or the second array 54 to be oriented such that the gesture 28 registers on the array as corresponding to the hand 16 moving diagonally across the first array 30 and/or the second array 54.

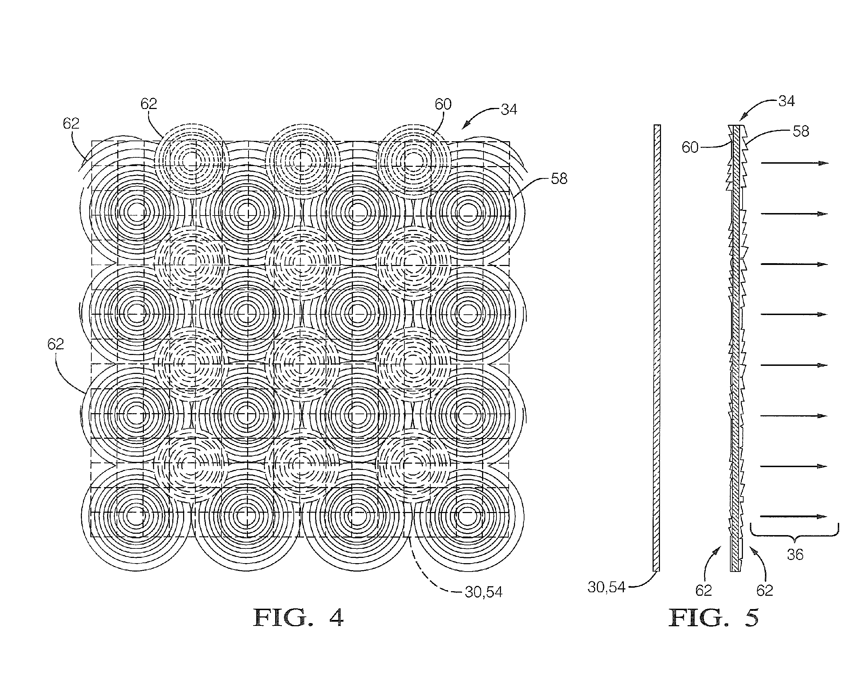

Figs. 4-5 illustrates a non-limiting example of the lens 34 characterized as a multi-focal length Fresnel lens panel arranged proximate to the first array 30 or the second array 54. Fig. 4 illustrates a front view of the lens 34, and Fig 5 illustrates a sectional side view of the lens 34. In general, the lens 34 is formed of an arrangement of a plurality of Fresnel lens elements, hereafter the elements 62, comparable to typical Fresnel lens elements. As used herein, a typical Fresnel lens element is characterized as having a single focal length and a shape that includes concentric annular sections. Each of the annular sections of a typical Fresnel lens refracts light toward a particular direction, but each annular section is characterized as having the same or similar focal length. In this non-limiting example, the elements 62 includes a grooves-out element 58 configured to be oriented toward the field of view 20, and a grooves-in element 60 configured to be oriented toward the first array 30 or the second array 54.

It is pointed out that the varied line thickness use to illustrate of the elements 62 are varied in order to illustrate that the focal lengths of the elements varies from relatively short at the top of the lens 34 to relatively long at the bottom of the lens as described in more detail below. The multi-focal length Fresnel lens panel (the lens 34) combines Fresnel lens elements (the elements 62) having different focal lengths (i.e. different radii of curvature) to refract and redirect multiple zones or fields of view within the field of view 20. The lens 34 may be characterized as being comparable or analogous to, but different from, eyeglasses that have a bifocal section, e.g. a first element for focusing on near objects, and a second element for focusing on distant objects.

The lens 34 illustrated in this non-limiting example includes a plurality of elements 62 configured to focus infrared (temperature) radiation to different temperature sensors or thermopiles forming the first array 30 and the second array 54. Each of the elements 62 may have a different radius of curvature corresponding to a different focal length. It is known in the art that the focal length of a lens is a function of the refractive index of the lens material, the lens thickness and the radius of curvature per the Lensmaker's Equation:

$$\frac{1}{f} = (n-1)\left[\frac{1}{R_1} - \frac{1}{R_2} + \frac{(n-1)d}{nR_1R_2}\right]$$

Eq. 1

where, f is the focal length of the lens,

n is the refractive index of the lens material,

$R_1$ is the radius of curvature of the front surface of lens,

$R_2$ is the radius of curvature of the back surface of lens, and

d is the thickness of the lens or distance between surface vertices.

The multiple focal lengths advantageously allows the lens 34 to focus infrared radiation on the first array 30 to provide similar size spot resolutions at different ranges (or distances) for different zones 36 of the field of view 20. In a non-limiting example, elements 62 having a focal length of 2.5 mm arranged over a portion of the multi-focus Fresnel lens to focus thermal irradiance to an approximate 0.15 meter spot resolution for objects that are up to 0.5 meter away from the first sensor 18. A focal length of 5.0 mm is used to focus the same approximate 0.15 meter spot resolution for objects at 0.5 meter to 1.0 meter distance from the first sensor 18. A focal length of 7.5 mm is used to focus the same approximate 0.15 meter spot resolution for objects at 1.0 meter to 1.5 meter distance from the first sensor 18. A focal length of 10.0 mm is used to focus the same approximate 0.15 meter spot resolution for objects from 1.0 meter and greater within the vehicle interior 22 from the first sensor 18.

Using the lens 34 described herein is advantageous to keep a relatively tight and consistent spot focus of the thermal radiation onto the temperature sensors 32 forming the first array 30. The lens 34 is also advantageous because the thickness of the lens 34 is substantially less than a typical thermal lens and so the thermal or infrared transmission through the lens 34 is improved. The lens 34 may be advantageously formed of (POLY IR2® infrared transmitting plastic from Fresnel Technologies, Inc.) to reduce cost and weight of the lens 34. Alternatively, the lens 34 may be formed of more traditional thermal lens materials such as silicon, germanium, and chalcogenide glass.

Referring again to Fig. 3, the first array signal 38 may be communicated to a controller 40. In general, the controller 40 is configured to determine a zone temperature value for each of the zones 36 based on the first array signal 38, and recognize the gesture 28 made by the occupant 12 based on the zone temperature values. The controller 40 may include a processor such as a microprocessor or other control circuitry as should be evident to those in the art. The controller 40 may include memory, including non-volatile memory, such as electrically erasable programmable read-only memory (EEPROM) for storing one or more routines, thresholds and captured data. The one or more routines may be executed by the processor to perform steps for determining if signals received by the controller 40 indicate that the occupant 12 is making the gesture 28 as described herein. The controller 40 may be further configured to output a vehicle control signal 48, that, for example, communicate with the entertainment system 24 in a manner effective to increase the volume output by the entertainment system 24.

Accordingly, a non-contact gesture recognition system (the system 10) for the non-contact gesture recognition is provided. It is notable that the system 10 does not rely on illumination of the vehicle interior 22 by an infrared light emitter to recognize the gesture 28. This is an advantage that stands in contrast to many gesture recognition systems that employ infrared cameras and so rely on a scene being illuminated by some source of infrared light. Furthermore, as the system 10 recognizes gestures without the occupant 12 making contact with a touch screen or other contact sensitive device, there is no touch screen to damage, wear out, or get dirty with fingerprints, and the occupant 12 does not need to divert attention from operating the vehicle to find the proper point of contact.

While this invention has been described in terms of the preferred embodiments thereof, it is not intended to be so limited, but rather only to the extent set forth in the claims that follow.

## Claims

1. A non-contact gesture recognition system (10) for recognizing gestures (28) made by an occupant (12) of a vehicle (14), said system (10) comprising:

   a first multiple-zone temperature sensor (18) equipped with a first array (30) of temperature sensors (32), said first sensor (18) configured to be installed on the vehicle (14) effective to have a first field of view (20) of a vehicle interior (22) of the vehicle (14), and output a first array signal (38) based on temperature signals from the first array (30), said first array signal (38) indicative of a zone temperature for each of a plurality of zones (36) within the first field of view (20); and

a controller (40) configured to receive the first array signal (38) and determine a zone temperature value for each of the zones (36) based on the first array signal (38), and recognize a gesture (28) made by the occupant (12) based on the zone temperature values, wherein the system (10) does not rely on illumination of the vehicle (14) interior by an infrared light emitter to recognize the gesture (28).

2. The system (10) in accordance with claim 1, wherein the system (10) further comprises a second multiple-zone temperature sensor equipped with a second array (54) of temperature sensors (32) distinct from the first array (30), said second sensor (50) configured to be installed in the vehicle (14) at a location spaced apart from the first sensor (18) and have a second field of view (20) characterized as intersecting the first field of view (20) from a distinct perspective, said second sensor (50) configured to output a second array signal (52) based on temperature signals from the second array (54), said second array signal (52) indicative of a zone temperature for each of a plurality of zones (36) within the second field of view (20).

3. The system (10) in accordance with any of the preceding claims, wherein the first array (30) is oriented such that a sample direction on the array arising from the gesture (28) is characterized as diagonal.

4. The system (10) in accordance with any of the preceding claims, wherein the first sensor (18) further comprises a multi-focal length Fresnel lens (34) panel formed of a plurality of Fresnel lens (34) elements (62).

5. The system (10) in accordance with claim 4, wherein the plurality of Fresnel lens (34) elements (62) have various focal lengths.

FIG. 1

FIG. 2

FIG. 3

FIG. 4

FIG. 5